# EUROPEAN PATENT SPECIFICATION

(11) **EP 2 199 123 B1**
(45) Date of publication and mention of the grant of the patent: **16.05.2012**
(21) Application number: 08171773.8
(22) Date of filing: 16.12.2008
(51) Int. Cl.: B60G 17/015, B60G 17/052, B60G 21/073

(54) **Control system for pneumatic suspensions of a vehicle provided with at least a driving axle and at least an additional axle with symmetrical load on each axle**
Steuersystem für pneumatische Aufhängungen eines mit mindestens einer Antriebsachse und mindestens einer Zusatzachse ausgestatteten Fahrzeugs mit symmetrischer Achsenbelastung
Système de commande de suspensions pneumatiques d'un véhicule fourni avec au moins un pont moteur et au moins un essieu supplémentaire avec une charge symétrique sur chaque essieu

(43) Date of publication of application: 23.06.2010
(73) Proprietor: IVECO MAGIRUS AG, 89079 Ulm (DE)
(72) Inventor: Spitz, Mario, 86381, Krumbach (DE); Stuerner, Johann, 89079, ULM (DE)
(74) Representative: Borsano, Corrado

(56) References cited:
- DE-A1- 3 815 612
- DE-A1- 19 530 260
- JP-A- 1 141 112

## Description

### Application field of the invention

The present invention refers to a control system for pneumatic suspensions of a vehicle provided with at least one driving axle and at least one additional axle with symmetrical load on each axle.

### Description of the prior art

In the vehicles equipped with pneumatic suspensions, especially industrial or commercial vehicles, a control system controls the suspension trim and the flow of the compressed fluid (typically air).

The control system is defined for the most complex solution, namely the vehicles with occasional distribution of the load, where, therefore, each suspension is controlled independently from the others in order to give the right response to the part of the load weighing on it.

This means that, in order to have an optimal control on the suspension, and above all in order to properly manage the load ratio among the different axles, each suspension need its own control elements, such as level sensors, pressure sensors, and solenoid valves which determine the air flow in its own pneumatic circuit.

The system detects the load on each wheel by detecting the distance between the frame and the axles with the level sensors, and controls the solenoid valves which make the air come in or go out through the bellows, so that the vehicle floor remains levelled, in addition to other static functions, such as the alignment of the loading floor of the vehicle with the ground of the loading place.

Normally two level sensors are installed on each axle, one on the right side and the other on the left side of the vehicle frame, see for example DE19530260.

In order to control the load distribution among the axles, pressure sensors are also needed on both cells on the left and right parts of each axle.

### Therefore this control system is complex and expensive.

There are some kind of vehicles, such as tractors with semitrailers, with coupling in the middle of the vehicle, or tank trucks transporting liquids, where, regardless of how the load is distributed (in the semitrailer of the tractors, or in the tank or the tank truck), said load on the tractor suspensions is symmetrical, since it appears to be applied on a central point of support (the pivot of the coupling of the tractor, the central axle of the tank truck).

For example, in a tractor provided with main bridge and additional axle, the control system of the pneumatic suspensions of the type known described above needs at least two level sensors (left and right), from two to four pressure sensors, and a group of five solenoid valves. More in detail one solenoid valve for each side, one for each axle, one in the middle in order to load air through the bellows, four pressure sensors and two level sensors with their relative pipes, ducts, and electric wires. This solution implies, for the vehicles with symmetrical distribution of the load, high costs for their components, high costs for the installation, high costs for their spare parts.

### Summary of the invention

Therefore the aim of the present invention is to overcome all the drawbacks mentioned above and to provide a control system for pneumatic suspensions of a vehicle with longitudinally symmetrical load on each axle, which is less complex and expensive than the system of the type known, but is at least as technically effective as is the known ones.

In order to reduce the complexity of the system and its costs, the system proposed has less components but is able to fulfil the tasks of the vehicular suspension. At the basis of this idea there is the concept of symmetry, namely the fact that on these vehicles the load is not different on the right and on the left side, especially on the bridge and on the additional axle.

According to the present invention, a control system for pneumatic suspension of a vehicle with symmetrical load on each axle comprises essentially one single load level sensor, one single pressure sensor for each axle, one single solenoid valve for each axle, in addition to one for the charging and the discharging of the air.

The present invention refers in particular to a control system for pneumatic suspensions of a vehicle provided with at least one driving axle and at least one additional axle with symmetrical load on each axle, as described more fully in the claims, which are an integral part of the present description.

### Brief description of the Figures

Further purposes and advantages of this invention will become clear from the following detailed description of a preferred embodiment and the drawings that are attached hereto that are merely illustrative and not limitative, of which:

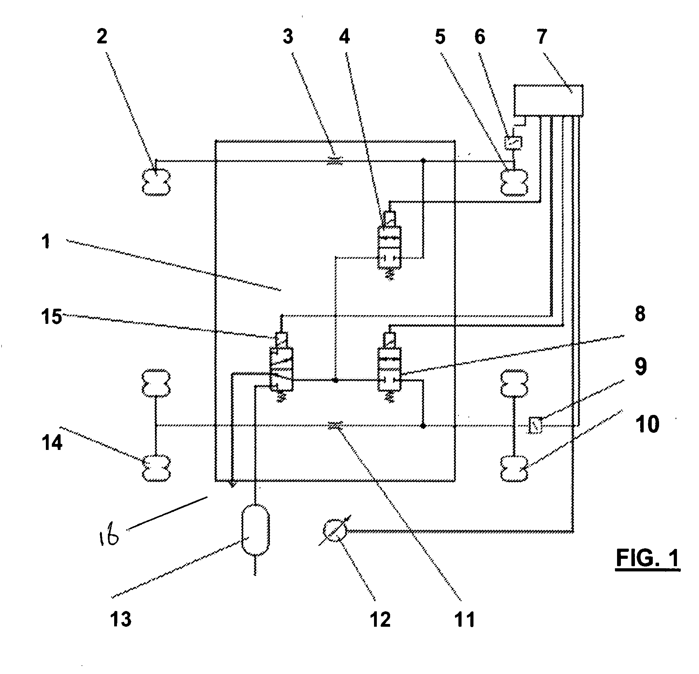

figure 1 shows a general outline of the control system for pneumatic suspension according to the present invention.

### Detailed description of preferred embodiments of the invention

With reference to figure 1, the description below refers in particular to an embodiment of the control system for pneumatic suspension of a tractor with symmetrical load provided with two axles, a main bridge and an additional axle.

The system comprises a group of solenoid valves 1 which together with the level sensor 12, the pressure sensors 6 and 9, and the electronic control unit 7, manage the pressures on the air cells of the pneumatic suspensions 10 and 14 of the bridge, or driving axle, and the air cells 2 and 5 of the additional axle.

More in particular, the compressed air coming from an air source 13 is controlled by the solenoid valve 15. The latter, according to what needed, together with the solenoid valves 4 and 8, feeds or discharges, by means of an outlet 16, the air pressure from the air cells of the suspensions 2, 5, 10, 14.

One single level sensor of the suspensions 12 is enough, and anyway necessary, in order to detect the variation of the suspension trim, in particular that of the bridge, and adjust the load level of the vehicle.
Moreover, one single pressure sensor (6, 9) and one single solenoid valve for each axle are enough, given the symmetry of the load.

These components are controlled by an electronic control unit 7, and are of a type known in the art.

According to the pressure detected by sensors 6 and 9, the electronic control unit 7 manages the distribution of the load between the bridge and the additional axle.

In order to improve the vehicle's behaviour, especially on a bend, it is preferable to add appropriate narrowings 3 and 11 in the pneumatic pipes connecting the right and the left air cells.

The narrowings 3 and 11 in the pneumatic circuit are useful in order to counterbalance the unbalancing dynamic effect of the load on a bend, which will let too much air to pass from one side to the other of the circuit, as a consequence of the centrifugal force. Therefore the narrowings, which can be made in a way known in the art, limit the circulation of the air among the air cells on the same axle.

It will be apparent to the person skilled in the art that other alternative and equivalent embodiments of the invention can be conceived and reduced to practice without departing from the scope of the claimed invention.

The advantages deriving from the use of this invention are evident.

The number of the components is reduced, the costs of the components and of the installation are reduced, the costs of the spare parts are reduces.

From the description set forth above it will be possible for the person skilled in the art to embody the invention with no need of describing further construction details.

## Claims

1. Control system for pneumatic suspension of a vehicle provided with at least one driving axle and at least one additional axle with symmetric load on each axle, comprising:
- one single load level sensor (12);
- one single pressure sensor (6, 9) for each axle of the vehicle;
- one single solenoid valve (4, 8) for each axle of the vehicle, suitable to determine the charging and the discharging of the air in air cells (2, 5, 10, 14) of the relative axle;
- one single solenoid valve (15), connected to said solenoid valves (4, 8) for each axle of the vehicle, suitable to determine the charging and discharging of the air;
the control system being configured for managing a distribution of the load between the driving axle and the additional axle according to the pressure detected by said pressure sensors (6, 9) and for adjusting the load level of the vehicle according to said single load level sensor (12).

2. Control system as in claim 1, further comprising an electronic control unit (7) for controlling the operating state of the components.

3. Control system as in claim 1 or 2, further comprising narrowings (3, 11) in the pneumatic pipes connecting the air cells on each vehicle axle, suitable for limiting the air circulation among the air cells on the same axle due to the unbalancing of the load on a bend.

4. Control system as in claim 1, wherein said air charging takes place toward a compressed air source (13) and said discharging takes place toward the atmosphere by means of an outlet (16).

## Patentansprüche

1. Steuersystem für eine pneumatische Aufhängung eines mit zumindest einer Antriebsachse und zumindest einer zusätzlichen Achse ausgestatteten Fahrzeugs mit einer symmetrischen Last an jeder Achse, umfassend:
- einen einzelnen Lastniveausensor (12);
- einen einzelnen Drucksensor (6, 9) für jede Achse des Fahrzeugs;
- ein einzelnes Solenoidventil (4, 8) für jede Achse des Fahrzeugs, das geeignet ist, um das Befüllen und das Ablassen der Luft in Luftzellen (2, 5, 10, 14) der entsprechenden Achse festzulegen;
- ein einzelnes Solenoidventil (15), das mit den Solenoidventilen (4, 8) für jede Achse des Fahrzeugs verbunden ist und geeignet ist, das Befüllen und das Ablassen der Luft festzulegen;
wobei das Steuersystem ausgebildet ist, um eine Verteilung der Last zwischen der Antriebsachse und der zusätzlichen Achse gemäß dem Druck zu regulieren, der durch die Drucksensoren (6, 9) detektiert wird, und um das Lastniveau des Fahrzeugs gemäß dem einzelnen Lastniveausensor (12) einzustellen.

2. Steuersystem nach Anspruch 1,
das ferner eine elektronische Steuereinheit (7) umfasst, um den Betriebszustand der Komponenten zu steuern.

3. Steuersystem nach Anspruch 1 oder 2,
das ferner Verengungen (3, 11) in den pneumatischen Rohren umfasst, welche die Luftzellen an jeder Fahrzeugachse verbinden, welche Verengungen geeignet sind, um die Luftzirkulation zwischen den Luftzellen an derselben Achse aufgrund des Ungleichgewichts der Last in einer Kurve zu begrenzen.

4. Steuersystem nach Anspruch 1,
wobei die Luftbefüllung in Richtung einer unter Druck stehenden Luftquelle (13) stattfindet und das Ablassen in Richtung der Atmosphäre mittels eines Auslasses (16) stattfindet.

## Revendications

1. Système de commande pour une suspension pneumatique d'un véhicule, doté d'au moins un pont moteur et d'au moins un essieu supplémentaire avec une charge symétrique sur chaque essieu, comprenant :
un seul capteur de niveau de charge (12) ;
un seul capteur de pression (6, 9) pour chaque essieu du véhicule ;
une seule électrovanne (4, 8) pour chaque essieu du véhicule, appropriée pour déterminer le chargement et le déchargement de l'air dans des piles à dépolarisation par l'air (2, 5, 10, 14) de l'essieu relatif ;
une seule électrovanne (15) raccordée auxdites électrovannes (4, 8) pour chaque essieu du véhicule, appropriée pour déterminer le chargement et le déchargement de l'air ;
le système de commande étant configuré pour gérer une distribution de la charge entre le pont moteur et l'essieu supplémentaire selon la pression détectée par lesdits capteurs de pression (6, 9) et pour ajuster le niveau de charge du véhicule selon ledit capteur de niveau de charge unique (12).

2. Système de commande selon la revendication 1, comprenant en outre une unité de commande électrique (7) pour commander l'état de fonctionnement des composants.

3. Système de commande selon la revendication 1 ou 2, comprenant en outre des rétrécissements (3, 11) dans les tuyaux pneumatiques raccordant les piles à dépolarisation par l'air sur chaque essieu de véhicule, appropriés pour limiter la circulation de l'air parmi les piles à dépolarisation par l'air sur le même essieu en raison du déséquilibre de la charge sur un coude.

4. Système de commande selon la revendication 1, dans lequel ledit chargement d'air a lieu vers une source d'air comprimé (13) et ledit déchargement a lieu vers l'atmosphère au moyen d'une sortie (16).
